# EUROPÄISCHE PATENTSCHRIFT

(11) **EP 1 162 680 B1**
(45) Veröffentlichungstag und Bekanntmachung des Hinweises auf die Patenterteilung: **24.11.2010**
(21) Anmeldenummer: 01112522.6
(22) Anmeldetag: 23.05.2001
(51) Int. Cl.: H01M 8/04, F28C 3/08, F28D 9/00, H01M 8/02

(54) **Vorrichtung und Verfahren zum Befeuchten eines Gasstroms sowie Verwendung der Vorrichtung**
Device and method for humidifying a gas stream and use of the device
Dispositif et méthode pour humidifier un courant de gaz ainsi que l'utilisation du dispositif

(30) Priorität: 07.06.2000 DE 10028133
(43) Veröffentlichungstag der Anmeldung: 12.12.2001
(73) Patentinhaber: NuCellSys GmbH, 73230 Kirchheim/Teck-Nabern (DE)
(72) Erfinder: Blaszczyk, Janusz, Richmond, BC, Canada V7C 5R8 (CA); Fleck, Wolfram, V3J 5V5 Coquitlam BC, Canada (CA); Keddie, Colin, V5Z 1X4 Vancouver, BC Canada (CA)
(74) Vertreter: JENSEN & SON

(56) Entgegenhaltungen:
- EP-A2- 0 911 598
- DE-A1- 3 811 852
- US-A- 3 366 158
- US-A- 5 845 505

## Beschreibung

Die Erfindung betrifft eine Vorrichtung und ein Verfahren zum Befeuchten eines Gasstroms sowie die Verwendung der Vorrichtung gemäß den Oberbegriffen der unabhängigen Ansprüche.

Aus der EP 0 629 014 B1 ist ein Verfahren zur Befeuchtung von Prozeßgas für den Betrieb von Brennstoffzellen bekannt, bei dem fein zerstäubtes Wasser in einer vorgegebenen Menge mit Hilfe einer Einspritzdüse aus einer Versorgungsleitung in eine Gaszuführungsleitung der Brennstoffzelle eingespritzt wird. Dabei wird ein Sollwert für die zuzuführende Wassermenge in Abhängigkeit von Betriebsparametern ermittelt und die Wassermenge wird über eine Regelung exakt so dosiert, daß sich die gewünschte Feuchtigkeit der Prozeßgase einstellt.

Die direkte Zufuhr von Wasser in den Gasstrom erfolgt dabei durch eine Zerstäubung mittels einer Einspritzdüse. Die maximal zulässige Tröpfchengröße muß dabei aufgrund der Geometrie der Gasführungskanäle der Brennstoffzelle so bestimmt werden, daß die Tröpfchen keine Querschnitte im Bereich der Brennstoffzelle verstopfen können.

Neben dieser Problematik der zulässigen Tröpfchengröße, welche eine spezielle Anpassung des Brennstoffzellensystems an die Zerstäubung erforderlich macht, ist außerdem auch der Aufwand bezüglich der Regelung bzw. der Ermittlung der Sollgrößen für die Regelung bzw. Steuerung der Wasserdosierung aufwendig.

Neben dieser direkten Einspritzung von Wasser in die Gasströme sind weitere Vorrichtungen und Verfahren zur Befeuchtung von Gasströmen aus dem Stand der Technik bekannt. Diese Systeme nutzen dabei verschiedenartige Membranen, welche den Gasstrom von einem Flüssigkeitsstrom oder einer Flüssigkeitsvorratskammer trennen. Die Membranen lassen es dabei zu, daß Flüssigkeitsteilchen durch die Membran hindurch in den Gasstrom eintreten und von diesem aufgenommen und mit transportiert werden. Als exemplarisches Beispiel sei hierzu die US 4,973,530 genannt.

Die bekannten Vorrichtungen zur Befeuchtung von Prozeßgasen wie Luft oder Wasserstoff sind üblicherweise schwer und groß. Üblicherweise müssen die Medien vor dem Eintritt in den Befeuchter gekühlt werden. Friert ein Medium dagegen im Befeuchter aus, wird der Befeuchter beschädigt.

Das Patent US 3,366,158 A beschäftigt sich mit Fallfilmverdampfern, welche üblicher Weise dafür eingesetzt werden Lösungen thermisch empfindlicher Substanzen, z.B. Fruchtsäfte, einzuengen. Derartige Verdampfer sind speziell so ausgelegt, dass thermische Belastungen der empfindlichen Substanzen weitgehend vermieden werden, um Verunreinigungen durch Zersetzungsprodukte zu verhindern. Dazu wird zum einen dafür gesorgt, dass der fallende Film nirgends reißt, wodurch die Substanzen an der Stelle des Filmrisses trocken fallen, sich absetzen und dadurch einer inakzeptabel langen thermischen Belastung ausgesetzt sein würden; zum anderen wird mit nur geringfügigen Temperaturunterschieden geheizt.

Das Patent US 5,845,505 A beschäftigt sich mit Lufttrocknern. Der Lufttrockner weist Kühlrippen auf an denen ein warmer, feuchter Luftstrom vorbeigeleitet wird. An den Kühlrippen kondensiert die Feuchtigkeit des Luftstroms aus und fällt danach in Form von Tröpfchen der Schwerkraft folgend zu Boden, wo das Wasser gesammelt und anschließend via einer Drainage aus dem Lufttrockner entfernt wird. Beim Vorbeiströmen an den Kühlrippen entstehen in dem Luftstrom Turbulenzen, die die Wärmeleitung zwischen den Kühlrippen und dem Luftstrom verbessern.

Die Offenlegungsschrift DE 38 11 852 A1 offenbart einen Verdampfer für flüssiges Erdöl. Das Erdöl wird in dem Verdampfer zunächst in einer Sprühkammer mit Hilfe von Düsen in feine Tröpfchen zerstäubt und dabei in einen Gasstrom aus Wasserstoff und Kohlendioxid hinein verdüst. Der mit Erdöltröpfchen angereicherte Gasstrom fließt dann in Wärmetauscherrohre, in denen die Tröpfchen verdampft werden. Der so erzeugte Dampfstrom dient in einem nachgeschalteten Reaktor als Brennstoff.

Die europäische Patentanmeldung EP 911 598 A2 offenbart eine Vorrichtung zum Verdampfen und Überhitzen eines flüssigen Reaktant-Massenstroms. Der Reaktant ist dazu vorgesehen, einem Gaserzeugungssystem zugeführt und darin in einen Brennstoff für eine Brennstoffzelle umgewandelt zu werden. Dazu wird der Reaktant in der offenbarten Vorrichtung verdampft und der Dampf gleichzeitig überhitzt. Dabei sinkt die relative Feuchte des Gasstroms, d.h. die offenbarte Vorrichtung liefert einen trockenen und heißen Gasstrom.

Es ist die Aufgabe der Erfindung, eine Vorrichtung und ein Verfahren anzugeben, mit der bzw. dem eine hohe relative Feuchte in einem Gasstrom erreichbar ist, wobei der Aufwand bezüglich Steuerung und Vorrichtung zur Befeuchtung des Gasstroms gering sein soll, die für den Einsatz bei tiefen Temperaturen geeignet ist und die einen befeuchteten Gasstrom erzeugt, der im wesentlichen frei ist von Wassertröpfchen zumindest oberhalb einer für eine Brennstoffzelle kritischen Größe.

Diese Aufgabe wird bei einer Vorrichtung mit den Merkmalen des Anspruchs 1 und bei einem Verfahren mit den Merkmalen des Anspruchs 9 gelöst.

Die erfindungsgemäße Vorrichtung ermöglicht die Befeuchtung durch Verdampfung bei niedrigen Temperaturen durch direkte Wärmeleitung ohne aufwendige Prozeßkontrolle. Ein weiterer Vorteil der Erfindung liegt darin, daß das zu verdampfende Medium in einem Befeuchter sehr fein und gleichmäßig verteilt wird, wodurch der Verdampfungsprozeß effizienter wird. Die Vorrichtung kann sowohl mit Medien mit hohen Temperaturen betrieben werden als auch ohne Probleme beim Gefrierpunkt arbeiten. Der Druckverlust in der Vorrichtung ist vorteilhaft niedrig.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei
- Fig. 1: eine Prinzipdarstellung einer bevorzugten Vorrichtung in verschiedenen Ansichten, wobei Fig. 1a die Vorrichtung von der Seite, Fig. 1b die Vorrichtung von oben, d.h. vom Wassereinlaß her gesehen, Fig. 1c eine Ausschnittsvergrößerung aus dem Innern der Vorrichtung zum Verdeutlichen der Verdampfungsvorgänge im Innern, Fig. 1d eine Ansicht der Seite der Vorrichtung mit den Zufuhr- und Abfuhranschlüssen des Wärmeträgermediums zeigt und
- Fig. 2: ein Detail des Wärmetauschers mit Strömungskanälen für den zu befeuchtenden Gasstrom und das Wärmetauschermedium,
- Fig. 3: einen Vergleich von Meßdaten für einen bevorzugten Befeuchter und einem bekannten Membran-Befeuchter zeigt.

Die Erfindung ist besonders dafür geeignet, einen Gasstrom zu befeuchten. Besonders bevorzugt wird eine erfindungsgemäße Befeuchter-Vorrichtung in einem Brennstoffzellensystem eingesetzt, um Prozeßgase zu befeuchten. Eine derartige Befeuchtung ist z.B. für die Kathodenzuluft oder auch für ein der Anode zugeführtes Medium notwendig, um den Wasserbedarf einer Membran einer Polymer-Elektrolyt-Brennstoffzelle sicherzustellen, oder auch zur Befeuchtung eines Edukts, um eine Reformierungsreaktion zur Gewinnung eines wasserstoffhaltigen Reformats in einem Gaserzeugungssystem eines Brennstoffzellensystems zu unterstützen. Die Erfindung wird nachfolgend anhand eines bevorzugten Brennstoffzellensystems beschrieben, ist jedoch auf diese Verwendung nicht beschränkt.

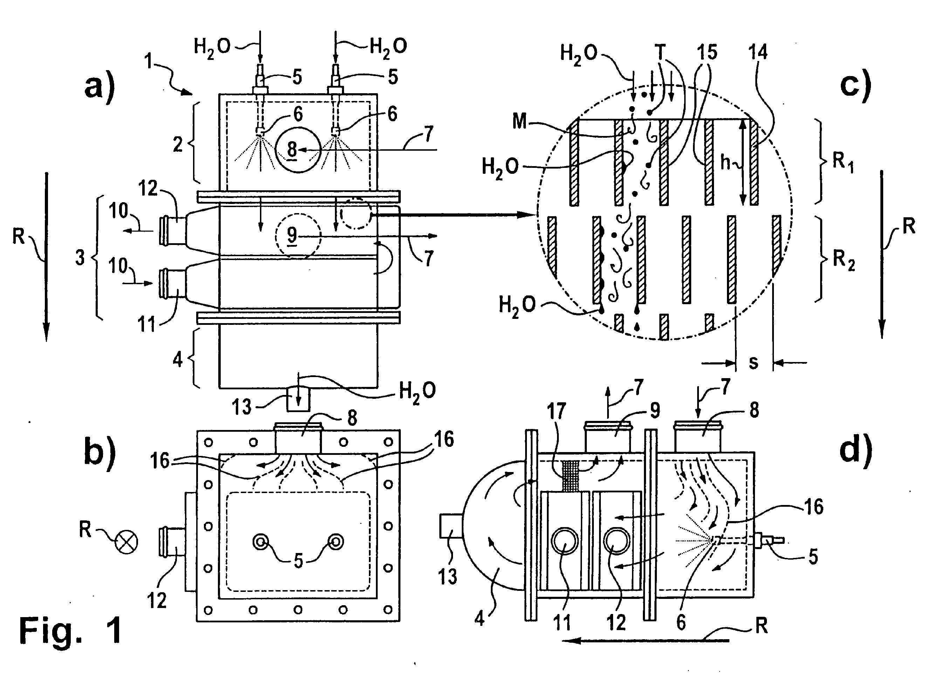

In Fig. 1 ist eine Prinzipdarstellung einer bevorzugten Ausbildung der erfindungsgemäßen Vorrichtung in mehreren Ansichten dargestellt. Die Befeuchter-Vorrichtung 1 in Fig. 1a besteht aus drei Sektionen, einer Sprühkammer 2, einem Wärmetauscherbereich 3 und einem Flüssigkeitsabscheider-Bereich bzw. Wasserabscheider-Bereich 4. Im Gegensatz zu bekannten Befeuchter-Vorrichtungen wird jedoch direkt Wärme von einem Wärmeträgermedium zu der zu verdampfenden Flüssigkeit, vorzugsweise Wasser, transportiert. Die Flüssigkeit bedeckt dabei eine relativ große Oberfläche eines Wärmetauschers im Innern der Vorrichtung.

Um einen direkten Wärmetransfer zu erreichen, wird flüssiges Wasser (H₂O) über Mittel 5, 6 zum Verdüsen einer Flüssigkeit, bevorzugt über eine oder mehrere Zuleitungen 5 mittels Düsen 6 in der Sprühkammer 2 in eine Vielzahl von Tröpfchen T zerstäubt. Die Zerstäubung findet vorzugsweise im Zentrum der Sprühkammer 2 oder möglichst nahe des Eingangs zum Wärmetauscherbereich 3 statt, in dem auch die Mischung mit dem Strom des zu befeuchtenden Prozeßgases 7 stattfindet. Die Sprühkammer 2 bildet die Gaszuführungsleitung für das Prozeßgas 7 in die Befeuchter-Vorrichtung 1. Das Prozeßgas 7 wird durch eine Prozeßgaszuführung 8 im Bereich der Sprühkammer 2 dem Befeuchter 1 zugeführt und im Bereich des Wärmeträgerbereichs 3 durch einen Prozeßgasauslaß 9 aus dem Befeuchter 1 abgeführt.

Im Wärmetauscherbereich 3 sind Mittel 10, 11, 12, 14, 15 zum Heizen der Flüssigkeit vorgesehen. Dabei wird ein Wärmeträgermedium 10 über eine Wärmeträgermedien-Zuführung 11 zugeführt und über einen Wärmeträgermedien-Auslaß 12 aus dem Wärmetauscherbereich 3 abgeführt. Bezogen auf die Strömungsrichtung des Wassers befindet sich die Wärmeträgermedien-Zuführung 11 stromab des Wärmeträgermedien-Auslasses 12. Im Wärmetauscherbereich 3 wird die Flüssigkeit zumindest teilweise verdampft.

Im Bereich des Wasserabscheiders 4 wird überschüssiges Wasser gesammelt und durch einen Wasser-Auslaß 13 abgeführt. Das Wasser bewegt sich dabei durch den Befeuchter 1 im wesentlichen entlang einer Strömungsrichtung R von oben nach unten.

Bevorzugt erfolgt eine Zufuhr der Flüssigkeit bzw. des Wassers zur Befeuchtung des Gasstroms in den Gasstrom des Prozeßgases. Die Flüssigkeit wird dabei in einer Menge zugeführt, welche größer ist als die theoretisch notwendige Menge, um eine relative Feuchte von 100 % zu erreichen. Eine Wegstrecke in Strömungsrichtung R nach der Zufuhr der Flüssigkeit wird die in ihrer flüssigen Phase verbleibende Restflüssigkeit wieder aus den Gasströmen abgeschieden.

In besonders vorteilhafter Art und Weise wird damit erreicht, daß durch diese überstöchiometrische Zufuhr von Flüssigkeit eine möglichst vollständige Verdampfung der eingebrachten Flüssigkeit erfolgen kann, wobei die für die Verdampfung erforderliche Energie aus dem thermischen Energieinhalt sowohl einem Wärmetauschermedium, welches zum Beheizen des Wärmetauschers 3 zugeführt werden kann, aus der zu verdampfenden Flüssigkeit als auch des Gases stammt. Dies bedingt eine annähernd ideale Kühlung und Befeuchtung der Gasströme. Durch eine Abscheidung der Restflüssigkeit, also der in dem Gasstrom verbleibenden Flüssigkeitströpfchen, kann zumindest weitgehend vermieden werden, daß flüssige Bestandteile in dem Gasstrom verbleiben. So gelangen praktisch keine Flüssigkeitströpfchen in die nachfolgenden Einrichtungen, in welchen diese gegebenenfalls Probleme bereiten könnten.

Der Wärmetauscherbereich 3 weist eine Vielzahl von Strömungskanälen für den zu befeuchtenden Gasstrom auf. Die Strömungskanäle werden zumindest teilweise von Kühlrippen 14 mit Wärmetauscherflächen 15 zum zumindest teilweisen Verdampfen der Flüssigkeit gebildet.

Beim Verdüsen des Wassers bilden sich eine Vielzahl von Wassertröpfchen T. Die Tröpfchen T werden vom Prozeßgas mitgerissen und von der Sprühkammer 2 in den Wärmetauscherbereich 3 transportiert. In dem Wärmetauscherbereich 3 sind eine Vielzahl von Kühlrippen 14 angeordnet. Die Oberflächen 15 der Kühlrippen 14 bilden Wärmetauscherflächen 15 und unterteilen den Gasstrom in eine Mehrzahl von parallelen Strömungskanälen mit einer Strömungsrichtung R.

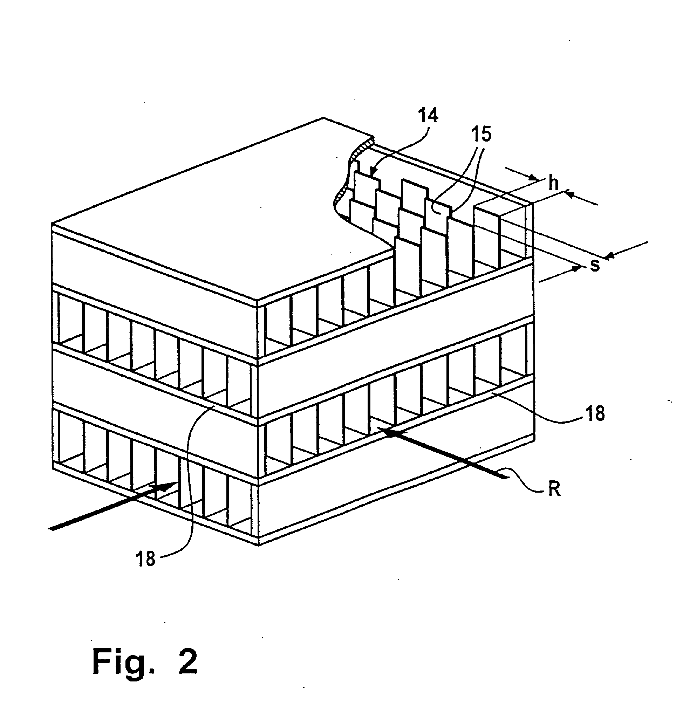

Die Kühlrippen 14 werden dabei bevorzugt mittels Wärmeleitung durch ein Wärmeträgermedium 10 beheizt. Dies ist in Fig. 2 anhand eines Details des Wärmetauscherbereichs 3 dargestellt. Versetzt angeordnete Kühlrippen 14 sind schichtweise angeordnet. Eine Mehrzahl von solchen Schichten sind übereinander angeordnet. Zwischen diesen Schichten kann ein Wärmeträgermedium 10 strömen. Wärme kann durch Wärmeleitung über die Kühlrippen 14 und die Begrenzungen 18 der Kühlrippen-Schichten abgegeben werden.

In Fig. 1c sind die Strömungskanäle zwischen den Kühlrippen 14 im Wärmetauscherbereich 3 als Ausschnittsvergrößerung der Fig. 1a detailliert dargestellt. Der Übersichtlichkeit wegen sind nur wenige Kühlrippen 14 sowie der Oberflächen 15 der Kühlrippen 14 mit einem Bezugszeichen versehen. Die Ansicht entspricht einer Draufsicht auf eine Schicht von Kühlrippen 14. Die Kühlrippen 14 sind bevorzugt in mehreren, in Strömungsrichtung des Wassers aufeinander folgenden, zueinander versetzten Reihen R1, R2, ... angeordnet. In jeder Reihe R1, R2, ... sind eine Vielzahl von Kühlrippen 14 mit einer Höhe h mit einem Abstand s eng beabstandet. Die in Strömungsrichtung R des Wassers bzw. der Tröpfchen T aufeinander folgenden Reihen R1, R2, ... sind vorzugsweise so gegeneinander versetzt, daß Kühlrippen 14 in einer ersten Reihe R1 Lücken zwischen Kühlrippen 14 einer direkt folgenden Reihe R2 gegenüber stehen. Die Kühlrippen 14 führen zu einer sehr großen inneren Oberfläche des Wärmetauscherbereichs 3. Vorzugsweise sind die Kanäle mit den versetzt angeordneten Kühlrippen 14 in mehreren parallel zueinander verlaufenden Schichten angeordnet. Zwischen den Schichten sind alternierend Ebenen mit Strömungskanälen für ein Wärmetauschermedium angeordnet, so daß Wärme aus dem Wärmetauschermedium auf die Kühlrippen 14 und damit in den Gasstrom eingetragen werden kann. Die Anordnung ist in Fig. 2 schematisch dargestellt. Es können anstatt Kühlrippen 14 auch andere Arten von Wärmetauscheranordungen im Wärmetauscherbereich 3 vorgesehen sein, wie Platten, Rohrbündel etc.

Für eine optimale Arbeitsweise des Befeuchters 1 werden zweckmäßigerweise die Geometrie der Kühlrippen 14 und die Größe der Tröpfchen geeignet aufeinander abgestimmt. In einer bevorzugten Ausbildung beträgt eine bevorzugte Höhe h der Kühlrippen 14 bzw. der Reihen R1, R2, ... einige Millimeter, vorzugsweise 5 mm. Ein bevorzugter Abstand s zwischen benachbarten Kühlrippen 14 beträgt weniger als 1 mm, besonders bevorzugt 0,9 mm. Eine bevorzugte Tröpfchengröße liegt dabei bei etwa 50 um Durchmesser.

Wassertröpfchen T, die im Gasstrom des Prozeßgases 7 mitgerissen werden, bleiben im Wärmetauscherbereich 3 zumindest teilweise auf der Oberfläche 15 der Kühlrippen 14 hängen. Tröpfchen T werden vom Prozeßgas 7 in den Wärmetauscherbereich 3 mitgerissen. Beim Eintreten in den Bereich der Kühlrippen 14 bilden sich Mikroturbulenzen M aus, die eine Haftung von Tröpfchen T auf der Oberfläche 15 der Kühlrippen 14 verstärken.

An der Oberfläche 15 der Kühlrippen 14 findet ein direkter Wärmeübertrag von den Kühlrippen 14 zu den Wassertröpfchen T statt. Dabei kann die Temperaturdifferenz zwischen Wassertröpfchen T und Wärmeträgermedium 10 bzw. Kühlrippen 14 relativ gering sein. Durch die strömungsunterstützte Haftung der Tröpfchen T auf der Oberfläche 15 kann das Wärmeträgermedium 10 relativ lange auf die Tröpfchen T einwirken und Verdampfungsenergie zuführen. So gelingt es vorteilhaft, viel Wasser in kurzer Zeit zu verdampfen. Überschüssiges Wasser, welches nicht verdampft, tropft in Richtung R nach unten in tiefere Bereiche des Wärmetauscherbereichs 3, wird dort bei Kontakt mit Kühlrippenoberflächen 15 entweder zumindest teilweise verdampft oder im Wasserabscheider 4 unterhalb des Wärmetauscherbereichs 3 gesammelt.

Zusätzlich kann ein Entfernen von Wassertröpfchen T aus dem Gasstrom 7 durch einen Koaleszenz-Filter 17 stromauf des Prozeßgasauslasses 9 unterstützt werden.

Die der Sprühkammer 2 zugeführte Wassermenge ist zweckmäßigerweise so groß, daß das Prozeßgas 7 gesättigt ist. Vorteilhafterweise beträgt die Wassermenge ein Vielfaches der minimal notwendigen Menge, so daß eine Regelung oder Steuerung der Wasserzufuhr entfallen kann. Überschüssiges Wasser wird einfach in dem Wasserabscheider 4 aufgefangen, der sich an den Wärmetauscherbereich 3 anschließt.

Es versteht sich, daß die Wassertröpfchen T mit verschiedenen geeigneten Mitteln erzeugt werden können, wie etwa mittels Verdüsen durch Druck, pneumatisch, mechanisch oder Unterdruck, ebenso kann die Zahl der Düsen und deren Anordnung variiert werden. Um die Kompatibilität zu den zu befeuchtenden Prozeßgasen zu verbessern, ist es zweckmäßig, das Material für den Wärmetauscherbereich entsprechend auszuwählen, etwa korrosionsresistente Stähle oder Aluminiumlegierungen, vorzugsweise AL-3003, bei der Befeuchtung von Wasserstoff und dergleichen.

Im Ausgangsbereich des Prozeßgases 7 ist es günstig, Mittel vorzusehen, um kleine Tröpfchen T, die im Prozeßgas 7 verblieben sind, zu dem im Wasserabscheider 4 aufgefangenen überschüssigen Wasser zurückzuführen. Eine Kontamination einer nachfolgend vom befeuchteten Prozeßgas 7 durchströmten Brennstoffzelle mit Verunreinigungen, die in den Wassertröpfchen T enthalten waren, wird damit weitgehend vermieden. Bevorzugt werden dazu Filter oder Separatoren, wie etwa Cyclon-Separatoren, Chevron-Separatoren, Koaleszenz-Filter oder ähnliche, verwendet.

Ein Chevron-Separator kann dabei vorteilhaft zwei Funktionen erfüllen. Zum einen ist er geeignet, die Tröpfchen T mit einer überkritischen Größe abzuseparieren, zum anderen verhindert er eine unerwünschte Wasserbewegung im Bodenbereich 4 des Befeuchters 1.

In Fig. 1d ist der erfindungsgemäße Strömungsweg des Prozeßgases 7 innerhalb der Vorrichtung 1 dargestellt. Der Strömungsweg verläuft zwischen Prozeßgaszufuhr 8 und Prozeßgasauslaß 9, indem das Prozeßgas erst durch die Sprühkammer 2, dann durch den Wärmetauscherbereich 3, dann in den Flüssigkeitsabscheider 4 und vom Flüssigkeitsabscheider 4 zum Prozeßgasauslaß 9 geführt wird. Am Prozeßgasauslaß 9 kann vorteilhaft ein Koaleszenz-Filter zum Trennen von Gas und Tröpfchen vorgesehen sein. Das befeuchtete Prozeßgas ist am Ausgang 9 der Vorrichtung im wesentlichen frei von Wassertröpfchen T oberhalb einer kritischen Größe.

Bevorzugt werden als Wärmeträger 10 Medien verwendet, die als Kühlmittel überschüssige Wärme aus dem nicht dargestellten Brennstoffzellensystem abführen. Die Temperatur eines solchen Wärmeträgermediums 10 reicht für die Verdampfung im Wärmetauscherbereich 3 aus. Werden jedoch Wärmeträgermedien 10 verwendet, deren Temperaturen oberhalb der Temperaturen solcher Kühlmedien im Brennstoffzellensystem liegen, kann der Befeuchter 1 in seiner Baugröße kleiner ausgeführt werden. Dazu kann das Wärmeträgermedium 10 durch elektrische oder thermische Mittel zusätzlich auf eine höhere Temperatur erhitzt werden.

Eine weitere günstige Maßnahme besteht in der Optimierung der Dimensionen des Wärmetauscherbereichs 3, indem auf der Gaseinlaßseite 8 des Prozeßgases 7 Mittel vorgesehen werden, um die Gasverteilung zu homogenisieren. Dazu sind Umlenkbleche 16 günstig, die in der Sprühkammer 2 angeordnet sind und die den Strom des Prozeßgases 7 so beeinflussen, daß der Gasstrom sich möglichst homogen verteilen kann. Eine weitere günstige Möglichkeit ist die Optimierung der Dimensionen und Anordnung des Wärmeträgermedienkreises 11, 12.

Günstig ist es, die Geometrie des Wärmetauscherbereichs 3 möglichst genau auf die Prozeßgasmenge und verfügbare Wärmeträgertemperaturen abzustimmen und so ein optimales Verhältnis von Länge zu Breite zu Tiefe des Wärmetauscherbereichs 3 zu erzielen. Ebenso ist es vorteilhaft, die Abstände s, Dimensionen h und auch Anordnung der Kühlrippen 14 im Innern des Wärmetauscherbereichs 3 aufeinander abzustimmen.

Vorteilhaft ist, eine Vorrichtung zur Kontrolle der Wasserstandshöhe im Wasserabscheider 4 vorzusehen.

Bei bekannten Befeuchtersystemen wird die Wärme nur mittelbar an das zu verdampfende Wasser abgegeben, indem die Wärme zuerst in das Prozeßgas oder in Luft und dann erst aus diesen Medien an Wassertröpfchen abgegeben wird. Damit ist der Energietransfer jedoch träge und wenig effizient. Gemäß der Erfindung wird durch den Prozeßgasfluß die Adhäsion von auf den Wärmetauscherflächen 15 des Wärmetauscherbereichs 3, bevorzugt den Kühlrippen 14, haftenden Wassertröpfchen T unterstützt und gefördert.

Verglichen mit einem üblichen Membran-Befeuchter kann eine Verwendung des erfindungsgemäßen Befeuchters 1 erhebliche Einsparungen an Volumen und an Gewicht eines Befeuchters bringen.

Bei vergleichbaren Umsätzen und Prozeßgasmengen ist ein optimierter Befeuchter 1 gemäß der Erfindung bis zu 70% kleiner und bis zu 80% leichter als eine vergleichbarer Membran-Befeuchter. Dies ist besonders bei einer Verwendung des erfindungsgemäßen Befeuchters 1 in mobilen Brennstoffzellensystemen von Vorteil. Zusätzlich werden erheblich Kosten für teure Membranen eingespart, wenn ein erfindungsgemäßer Befeuchter 1 statt eines Membran-Befeuchters verwendet wird; ein erfindungsgemäßer Befeuchter 1 kann bis zu 90% billiger sein als ein Membran-Befeuchter.

Ein weiterer Vorteil der erfindungsgemäßen Vorrichtung ist, daß die Zuverlässigkeit der Befeuchtungsvorrichtung verbessert ist, da weniger Komponenten notwendig sind. Außerdem kann die Vorrichtung, im Gegensatz zu Membran-Befeuchtern, auch mit erheblichen Druckdifferenzen zwischen Wärmeträgermedium 10 und Prozeßgas 7 arbeiten. Der erfindungsgemäße Befeuchter 1 ist im wesentlichen leckagefrei bzw. einfach abzudichten und kann ohne weiteres auch Temperaturen unterhalb des Gefrierpunkts von Wasser ausgesetzt werden, ohne Schaden zu nehmen.

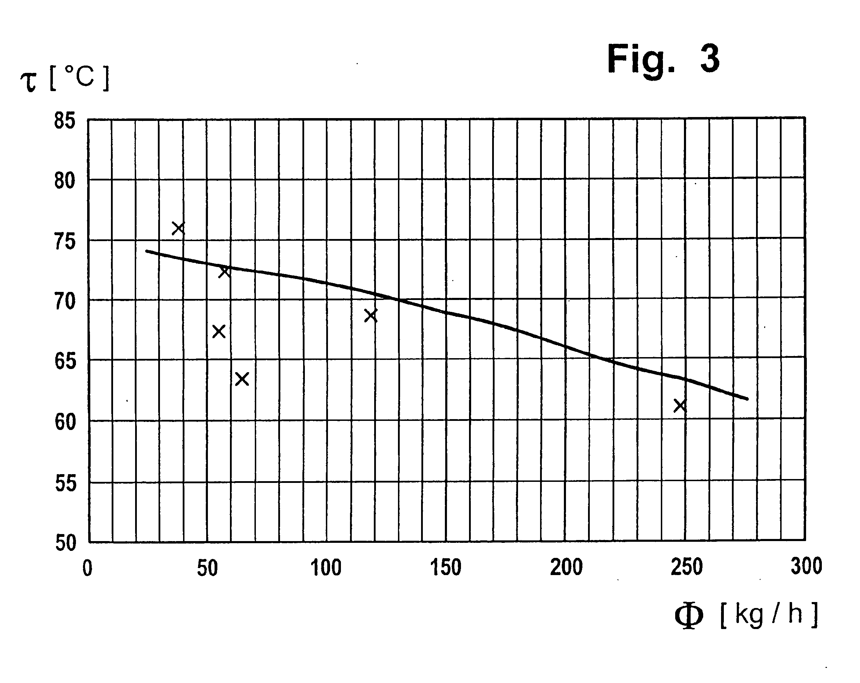

In Fig. 3 ist ein Vergleich zwischen einem erfindungsgemäßen Befeuchter 1 und einem Membran-Befeuchter dargestellt. Der Taupunkt τ eines Prozeßgases 7 ist in Abhängigkeit des Durchflusses Φ des Prozeßgases 7 aufgetragen. Die Werte des Membran-Befeuchters werden durch die durchgezogene Linie repräsentiert. Die Punkte stellen Meßdaten dar, die an einem Prozeßgas 7 gemessen wurden, welches mit einem erfindungsgemäßen Befeuchter 1 befeuchtet wurde. Für beide Versuche wurden vergleichbare Prozeßparameter wie Wärmeträgertemperatur, Prozeßgastemperatur, Prozeßgasdruck verwendet. Die Punkte streuen um die durchgezogene Kurve des Membran-Befeuchters und zeigen, daß ein erfindungsgemäßer Befeuchter 1 besonders einfach in ein System eingebaut werden kann, welches mit einem üblichen Membran-Befeuchter betrieben wird. Beide Befeuchtersysteme können vergleichbare Niedertemperatur-Wärmeträger verwenden und der Befeuchtungsgrad des Prozeßgases ist vergleichbar.

Als Wärmeträgermedium 10 läßt sich vorteilhaft Wasser oder auch Wasser mit einem Frostschutz verwenden, vorzugsweise ein Wasser-Glykol-Gemisch. Das Kühlsystem für das Brennstoffzellensystem kann kleiner ausgelegt werden, da Abwärme aus dem System beim Befeuchter 1 verwendet werden kann. Für das befeuchtete Prozeßgas 7 ist keine weitere Nachkühlung notwendig, da auch wegen des direkten Wärmetransfers vom Wärmeträgermedium 10 in die Wassertröpfchen T ein Wärmeträgermedium 10 mit niedriger Temperatur effizient zur Befeuchtung beiträgt.

Zur Befeuchtung eines Prozeßgases 7 ist keine weitere Steuerung oder Regelung notwendig, kann aber auch vorgesehen sein. Besonders im Vergleich mit üblichen Membran-Befeuchtern zeigen sich mehrere Vorteile des erfindungsgemäßen Befeuchters 1. Theoretisch sind, bezogen auf dasselbe nutzbare Volumen eines Befeuchters, erfindungsgemäß höhere Taupunkte τ erreichbar als bei einem Membran-Befeuchter. Der Druckabfall im Befeuchter 1 ist geringer als in einem vergleichbaren Membran-Befeuchter. Es wird weniger Wärmeträgermedium 10 benötigt, um ein Prozeßgas 7 mit einem vergleichbaren Feuchtegrad zu erhalten.

Der erfindungsgemäße Befeuchter 1 eignet sich besonders für den Einsatz in Brennstoffzellensystemen, bei dem eine Befeuchtung bei niedriger Prozeßgastemperatur gefordert ist.

## Patentansprüche

1. Vorrichtung zum Befeuchten eines Gasstroms, bei der Mittel (5, 6) zum Verdüsen einer Flüssigkeit in eine Gaszuführungsleitung (2) sowie Mittel (10, 11, 12, 14, 15) zum Heizen der Flüssigkeit und Mittel (5, 6) zum Verdüsen in einer Sprühkammer (2) vorgesehen sind,
wobei an die Sprühkammer (2) anschließend ein Wärmetauscherbereich (3) zum zumindest teilweisen Verdampfen der Flüssigkeit angeordnet ist,
wobei ferner der Wärmetauscherbereich (3) eine Vielzahl von Strömungskanälen für zu befeuchtende Gasströme aufweist und die Strömungskanäle zumindest teilweise von beheizten Wärmetauscherflächen (15) zum Verdampfen der Flüssigkeit begrenzt werden,
wobei außerdem in der Sprühkammer (2) eine Prozeßgaszuführung (8) und im Wärmetauscherbereich (3) ein Prozeßgasauslaß (9) vorgesehen ist,
**dadurch gekennzeichnet,**
**daß** ein Strömungsweg des Prozeßgases (7) zwischen Prozeßgaszufuhr (8) und Prozeßgasauslaß (9) erst durch die Sprühkammer (2), dann durch den Wärmetauscherbereich (3) in den Flüssigkeitsabscheider (4) und vom Flüssigkeitsabscheider (4) in den Wärmetauscherbereich (3) zurück verläuft.

2. Vorrichtung nach Anspruch 1,
**dadurch gekennzeichnet,**
**daß** angrenzend an den Wärmetauscherbereich (3) ein Flüssigkeitsabscheider (4) und/oder ein Koaleszenz-Filter (17) zum Abführen von überschüssiger Flüssigkeit aus der Vorrichtung vorgesehen ist.

3. Vorrichtung nach Anspruch 1,
**dadurch gekennzeichnet,**
**daß** in der Sprühkammer (2) Verteilermittel (16) vorgesehen sind, um eine Strömung des Prozeßgases (7) im Innern der Sprühkammer (2) zu beeinflussen.

4. Vorrichtung nach Anspruch 1,
**dadurch gekennzeichnet,**
**daß** im Wärmetauscherbereich (3) zur Zufuhr eines Wärmeträgermediums (10) eine Wärmeträgermedien-Zuführung (11) und ein Wärmeträgermedien-Auslaß (12) vorgesehen ist, wobei bezogen auf eine Strömungsrichtung (R) der Flüssigkeit im Innern der Vorrichtung (1) die Wärmeträgermedien-Zuführung (11) stromab des Wärmeträgermedien-Auslasses (12) angeordnet ist.

5. Vorrichtung nach Anspruch 1,
**dadurch gekennzeichnet,**
**daß** stromab des Wärmetauscherbereichs (3) Mittel zum zumindest teilweisen Abseparieren von Flüssigkeitstropfen aus dem Gasstrom und/oder zum Dämpfen oder Unterbinden von Flüssigkeitsbewegungen im Flüssigkeitsabscheider (4) vorgesehen sind.

6. Vorrichtung nach Anspruch 1,
**dadurch gekennzeichnet,**
**daß** die Wärmetauscherflächen (15) zumindest teilweise durch Oberflächen von Kühlrippen (14) gebildet sind.

7. Vorrichtung nach Anspruch 6,
**dadurch gekennzeichnet,**
**daß** die Kühlrippen (14) in zumindest zwei Reihen (R1, R2, ...) angeordnet sind, wobei die Kühlrippen (14) in jeder Reihe (R1, R2, ...) parallel angeordnet und eine Höhe (h) der Kühlrippen (14) und ein Abstand (s) zwischen in einer Reihe (R1, R2, ...) benachbarten Kühlrippen (14) zur Ausbildung von Mikroturbulenzen im Gasstrom geeignet sind.

8. Vorrichtung nach Anspruch 7,
**dadurch gekennzeichnet,**
**daß** Reihen (R1, R2, ...) von Kühlrippen (14) in Strömungsrichtung (R) versetzt zueinander angeordnet sind, so daß Kühlrippen (14) einer Reihe (R1) Lücken zwischen Kühlrippen (14) der in Strömungsrichtung (R) folgenden Reihe (R2) gegenüberstehen.

9. Verfahren zum Befeuchten eines Gasstroms, wobei eine Flüssigkeit verdüst und mit einem Gasstrom eines Prozeßgases (7) vermischt wird,
**dadurch gekennzeichnet,**
**daß** das Verdüsen der Flüssigkeit zu Tröpfchen (T) und Mischen der Tröpfchen (T) mit dem Gasstrom in einer Sprühkammer (2) erfolgt und das Prozeßgas/Tröpfchengemisch anschließend in einen beheizten Wärmetauscherbereich (3) geleitet wird, in welchem die Tröpfchen zumindest teilweise auf Wärmetauscherflächen (15) haften und dort zumindest teilweise durch Wärmeübertrag verdampft und dem Prozeßgas (7) zugeführt werden.

10. Verfahren nach Anspruch 9,
**dadurch gekennzeichnet,**
**daß** im Wärmetauscherbereich (3) Turbulenzen (M) im Gasstrom erzeugt werden, so daß die Haftung von Tröpfchen (T) auf den Wärmetauscherflächen (15) durch die Turbulenzen (M) im Gasstrom unterstützt oder verstärkt werden.

11. Verfahren nach Anspruch 9,
**dadurch gekennzeichnet,**
**daß** das Prozeßgas zum Befeuchten über eine Prozeßgaszufuhr (8) in die Sprühkammer (2), dann durch den Wärmetauscherbereich (3) in einen Wasserabscheider (4) und/oder einen Koaleszenz-Filter (17) geleitet und anschließend über einen Prozeßgasauslaß (9) aus der Vorrichtung (1) entfernt wird.

12. Verfahren nach Anspruch 11,
**dadurch gekennzeichnet,**
**daß** im Wasserabscheider (4) und/oder im Koaleszenz-Filter (17) überschüssige Flüssigkeit und/oder Tröpfchen aus dem befeuchteten Prozeßgas (7) entfernt werden.

13. Verwendung der Vorrichtung nach einem der Ansprüche 1 bis 8 zur Befeuchtung von Prozeßgasen in einem Brennstoffzellensystem.

## Claims

1. Device for humidifying a gas stream, wherein means (5, 6) for atomising a liquid into a gas supply line (2), means (10, 11, 12, 14, 15) for healing the liquid and means (5, 6) for atomising in a spray chamber (2) are provided,
wherein the spray chamber (2) is adjoined by a heat exchanger region (3) for the at least partial evaporation of the liquid,
wherein the heat exchanger region (3) further comprises a plurality of flow passages for the gas streams to be humidified and the flow passages are at least partially bounded by heated heat exchanger surfaces (15) for the evaporation of the liquid,
wherein a process gas inlet (8) is further provided in the spray chamber (2) and a process gas outlet (9) is provided in the heat exchanger region (3),
**characterised in that**
a flow path of the process gas (7) between the process gas inlet (8) and the process gas outlet (9) runs first through the spray chamber (2), then through the heat exchanger region (3) into the liquid separator (4) and from the liquid separator (4) back into the heat exchanger region (3).

2. Device according to claim 1
**characterised in that**
the heat exchanger region (3) is adjoined by a liquid separator (4) and/or a coalescence filter (17) for the removal of surplus liquid from the device.

3. Device according to claim 1
**characterised in that**
manifold means (16) are provided in the spray chamber (2) to influence a flow of the process gas (7) in the interior of the spray chamber (2).

4. Device according to claim 1
**characterised in that**
a heat transfer medium inlet (11) for the supply of a heat transfer medium (10) and a heat transfer medium outlet (12) are provided in the heat exchanger region (3), the heat transfer medium inlet (11) being located downstream of the heat transfer medium outlet (12) with respect to a direction of flow (R) of the liquid in the interior of the device (1),

5. Device according to claim 1
**characterised in that**
means for the at least partial separation of liquid droplets from the gas stream and/or for damping or preventing liquid movements in the liquid separator (4) are provided downstream of the hear exchanger region (3).

6. Device according to claim 1
**characterised in that**
the heat exchanger surfaces (15) are at least partially represented by surfaces of cooling fins (14).

7. Device according to claim 6
**characterised in that**
the cooling fins (14) are arranged in at least two rows (R1, R2, ...), wherein the cooling fins (14) in each row (R1, R2, ...) are arranged in parallel and wherein a height (h) of the cooling fins (14) and a spacing (s) between adjacent cooling fins in a row (R1, R2, ...) are suitable for the formation of mioro-turbulences in the gas stream.

8. Device according to claim 7
**characterised in that**
rows (R1, R2, ...) of cooling fins (14) are mutually offset in the direction of flow (R), so that the cooling fins (14) of one row (R1) are arranged opposite gaps between cooling fins (14) of the row (R2) which follows in the direction of flow (R).

9. Method for humidifying a gas stream, wherein a liquid is atomised and mixed with a gas stream of a process gas (7),
**characterised in that**
the atomisation of the liquid to form droplets (T) and the mixing of the droplets (T) with the gas stream is carried out in a spray chamber (2), and **in that** the process gas/droplet mixture is then fed into a heated heat exchanger region (3) where the droplets adhere at least partially to the heat exchanger surfaces (15) and are there partially evaporated by heat transfer and fed into the process gas (7).

10. Method according to claim 9,
**characterised in that**
turbulences (M) are generated in the gas stream in the heat exchanger region (3), so that the adhesion of droplets (T) to the heat exchanger surfaces (15) is supported or strengthened by turbulences (T) in the gas stream.

11. Method according to claim 9,
**characterised in that**
for humidification, the process gas is fed into the spray chamber (2) via a process gas inlet (8) and then through the heat exchanger region (3) into a water separator (4) and/or a coalescence filter (17), to be finally removed from the device (1) via a process gas outlet (9).

12. Method according to claim 11.
**characterised in that**
surplus liquid and/or droplets is/are removed from the humidified process gas (7) in the water separator (4) and/or in the coalescence filter (17).

13. Use of the device according to any of claims 1 to 8 for the humidification of process gases in a fuel cell system.

## Revendications

1. Dispositif pour humidifier un courant gazeux, qui comprend des moyens (5, 6) pour atomiser un fluide dans une conduite d'amenée de gaz (2) ainsi que des moyens (10, 11, 12, 14, 15) pour chauffer le fluide et des moyens (5, 6) pour atomiser dans une chambre de pulvérisation (2), une zone d'échange de chaleur (3) étant adjacente à la chambre de pulvérisation (2) destinée au moins partiellement à l'évaporation du fluide, plus loin la zone d'échange de chaleur (3) présentant une pluralité de canaux d'écoulement pour les courants gazeux devant être humidifiés et les canaux d'écoulement étant limités au moins partiellement par des surfaces d'échange de chaleur chauffées (15) servant à l'évaporation du fluide, de plus dans la chambre de pulvérisation (2) est prévue une arrivé de gaz de processus (8) et est prévue dans la zone d'échange de chaleur une sortie de gaz de procédé (9), **caractérisé en ce qu'**un parcours d'écoulement du gaz de procédé (7) passe entre l'amenée de gaz de procédé (8) et la sortie de gaz de procédé (9) d'abord par la chambre de pulvérisation (2) puis par la zone d'échange de chaleur (3) dans le séparateur de fluide (4) et du séparateur de fluide (4) dans la zone d'échange de chaleur (3).

2. Dispositif selon la revendication 1, **caractérisé en ce qu'**un séparateur de fluide (4) et / ou un filtre à coalescence (17) contiguë à la zone d'échange de chaleur (3) est prévu pour évacuer l'excédant de fluide dans le dispositif,

3. Dispositif selon la revendication 1, **caractérisé en ce que** dans la chambre de pulvérisation (2) sont prévus des moyens de distribution (16) qui influencent un écoulement du gaz de procédé (7) à l'intérieur de la chambre de pulvérisation (2).

4. Dispositif selon la revendication 1, **caractérisé en ce que** dans la zone d'échange de chaleur (3) est prévue une amenée de milieux de transfert de chaleur (11) pour amener un milieu de transfert de chaleur (10) et une sortie de milieux de transfert de chaleur (12), l'amenée de milieux de transfert de chaleur (11) étant disposée en aval de la sortie de milieux de transfert de chaleur (12) par rapport à la direction d'écoulement (R) du fluide à l'intérieur du dispositif (1).

5. Dispositif selon la revendication 1, **caractérisé en ce qu'**en aval de la zone d'échange de chaleur (3) sont prévus des moyens pour au moins partiellement séparer les gouttes de fluide du courant gazeux et / ou atténuer ou empêcher des mouvements de fluide dans le séparateur de fluide (4).

6. Dispositif selon la revendication 1, **caractérisé en ce que** ies surfaces d'échange de chaleur (15) sont formées au moins partiellement par les surfaces d'ailettes de refroidissement (14).

7. Dispositif selon la revendication 6, **caractérisé en ce que** les ailettes de refroidissement (14) sont disposées sur au moins deux rangées (R1, R2,...), lesdites ailettes de refroidissement (14) étant disposées parallèles les unes aux autres sur chaque rangée (R1, R2,...) et une hauteur (h) des ailettes de refroidissement (14) et un écartement (s) entre des ailettes de refroidissement (14) adjacentes sur une rangée (R1, R2,...) sont adaptées pour former des microturbulences dans le courant gazeux.

8. Dispositif selon la revendication 7, **caractérisé en ce que** les rangées (R1, R2,...) d'ailettes de refroidissement (14) dans le sens de l'écoulement (R) sont décalées !es unes par rapport aux autres de sorte que les ailettes de refroidissement (14) d'une rangée (R1) sont opposées aux trous entre les ailettes de refroidissement (14) de la rangée suivante (R2) dans le sens de l'écoulement (R).

9. Procédé pour humidifier un courant gazeux, un fluide étant atomisé et mélangé à un courant gazeux d'un gaz de procédé (7), **caractérisé en ce que** l'atomisation du fluide en gouttelettes (T) et le mélange des gouttelettes (T) s'effectue avec le courant gazeux dans une chambre de pulvérisation (2) et le gaz de procédé / le mélange des gouttelettes est ensuite conduit dans une zone d'échange de chaleur (3) chauffée dans laquelle les gouttelettes se fixent au moins partiellement aux surfaces d'échange de chaleur (15) et s'y évaporent au moins partiellement et alimentent le gaz de procédé (7).

10. Procédé selon la revendication 9, **caractérisé en ce que** des turbulences (M) sont générées dans la zone d'échange de chaleur (3) dans le courant gazeux de sorte que la fixation des gouttelettes (T) est assistée ou renforcée sur les surfaces d'échange de chaleur (15) par les turbulences (M) dans le courant gazeux.

11. Dispositif selon la revendication 9, **caractérisé en ce que** le gaz de procédé pour humidifier est conduit par une amenée de gaz de procédé (8) dans la chambre de pulvérisation (2) ensuite par la zone d'échange de chaleur (3) dans un séparateur de fluide (4) et / ou un filtre à coalescence (17) et ensuite est éliminé du dispositif (1) par une sortie de gaz de procédé (9).

12. Dispositif selon la revendication 11, **caractérisé en ce que** l'excès de fluide et / ou de gouttelettes est éliminé du gaz de procédé (7) humidifié dans un séparateur d'eau (4) et / ou dans un filtre à coalescence (17).

13. Utilisation du dispositif selon l'une quelconque des revendications 1 à 8 pour l'humidification de gaz de procécé dans un système de piles à combustible.
